# EUROPÄISCHE PATENTSCHRIFT

(11) **EP 3 812 981 B1**
(45) Veröffentlichungstag und Bekanntmachung des Hinweises auf die Patenterteilung: **15.04.2026**
(21) Anmeldenummer: 20203010.2
(22) Anmeldetag: 21.10.2020
(51) Int. Cl.: G06Q 10/04, G06Q 50/04, G06Q 10/06, G06Q 10/0631, G06Q 10/0633

(54) **VERFAHREN UND FERTIGUNGSANLAGE ZUR HERSTELLUNG EINES PRODUKTES**
METHOD AND MANUFACTURING SYSTEM FOR PRODUCING A PRODUCT
PROCÉDÉ ET INSTALLATION DE FABRICATION DESTINÉS À LA FABRICATION D'UN PRODUIT

(30) Priorität: 23.10.2019 AT 509162019
(43) Veröffentlichungstag der Anmeldung: 28.04.2021
(73) Patentinhaber: ABB Schweiz AG, 5400 Baden (CH)
(72) Erfinder: Zehnder, Thomas, 5142 Eggelsberg (AT); Huber, Stefan, 5142 Eggelsberg (AT)
(74) Vertreter: Patentanwälte Pinter & Weiss OG

(56) Entgegenhaltungen:
- EP-A1- 3 543 921
- WO-A1-2018/183275
- CN-A- 109 657 354
- CN-A- 110 276 147
- KAI DING ET AL: "Defining a Digital Twin-based Cyber-Physical Production System for autonomous manufacturing in smart shop floors", INTERNATIONAL JOURNAL OF PRODUCTION RESEARCH., vol. 57, no. 20, 16 January 2019 (2019-01-16), GB, pages 6315 - 6334, XP055685509, ISSN: 0020-7543, DOI: 10.1080/00207543.2019.1566661
- TAO FEI ET AL: "Digital Twin Shop-Floor: A New Shop-Floor Paradigm Towards Smart Manufacturing", IEEE ACCESS, vol. 5, 24 October 2017 (2017-10-24), pages 20418 - 20427, XP011672144, DOI: 10.1109/ACCESS.2017.2756069
- ZHANG LIN ET AL: "Modeling and simulation in intelligent manufacturing", COMPUTERS IN INDUSTRY, ELSEVIER, AMSTERDAM, NL, vol. 112, 7 September 2019 (2019-09-07), XP085854829, ISSN: 0166-3615, [retrieved on 20190907], DOI: 10.1016/J.COMPIND.2019.08.004
- LENG JIEWU ET AL: "Digital twin-driven manufacturing cyber-physical system for parallel controlling of smart workshop", JOURNAL OF AMBIENT INTELLIGENCE AND HUMANIZED COMPUTING, SPRINGER BERLIN HEIDELBERG, BERLIN/HEIDELBERG, vol. 10, no. 3, 2 June 2018 (2018-06-02), pages 1155 - 1166, XP036708388, ISSN: 1868-5137, [retrieved on 20180602], DOI: 10.1007/S12652-018-0881-5
- FEI TAO ET AL: "Digital twin-driven product design, manufacturing and service with big data", THE INTERNATIONAL JOURNAL OF ADVANCED MANUFACTURING TECHNOLOGY, vol. 94, no. 9-12, 16 March 2017 (2017-03-16), London, pages 3563 - 3576, XP055547858, ISSN: 0268-3768, DOI: 10.1007/s00170-017-0233-1

## Beschreibung

Die gegenständliche Erfindung betrifft ein Verfahren zur Herstellung eines Produktes in einer Fertigungsanlage, wobei das Produkt in der Fertigungsanlage in einer Anzahl von Fertigungsstationen gefertigt wird und zwischen aufeinander folgenden Fertigungsstationen mit Transporteinheiten bewegt wird, sowie eine entsprechende Fertigungsanlage.

Produkte werden heute üblicherweise in Fertigungsanlagen gefertigt. Dabei werden eine Vielzahl von Fertigungsstationen durchlaufen bis das Produkt fertig gestellt ist. Es ist heutzutage auch bereits Standard, dass jedes Produkt individuell behandelt und gefertigt wird (Batchsize One). Zur Fertigung des (Zwischen-)Produktes durch die Fertigungsanlage muss der Transportweg des Produkts durch die einzelnen Fertigungsstationen geplant werden. Die Auswahl der Fertigungsstationen aus den verfügbaren Fertigungsstationen und der Transportweg des Produktes durch die einzelnen Fertigungsstationen wird von einem Applikationsentwickler geplant und ausprogrammiert. Heutige Topologien einer Fertigungsanlage in der Fertigung sind immer Linien, d.h., dass das (Zwischen-)Produkt seriell durch die aufeinanderfolgenden Fertigungsstationen durchgeführt wird. Ausnahmen bildet die Parallelisierung von Fertigungsprozessen, um eine Lastverteilung zu erzielen, wobei dann typischerweise die parallel führenden Linien identische Fertigungsprozesse ausführen. Die Fertigungsstationen und Transportwege dazwischen werden von einer Liniensteuerung angesteuert, die vom Applikationsentwickler von Hand ausprogrammiert wird, sodass am Ende die Produkte entstehen, welche gewünscht sind. Dieses Vorgehen ist aber sehr zeitaufwendig, wenig flexibel und bedarf immer einen Programmierer.

Insbesondere bei komplexen Produkten mit vielen auf verschiedene Fertigungsstationen verteilten Fertigungsschritten wird die Programmierung der Fertigungsanlage schnell sehr aufwendig und es können dabei bei der Umsetzung des programmierten Ablaufs nicht absehbare Probleme auftreten, beispielsweise Engpässe (sogenannte Bottlenecks), die dazu führen, dass sich an gewissen Stellen der Fertigungsanlage Produkte stauen oder Fertigungsstationen zeitweise unproduktiv sind. Solche Engpässe sind natürlich unerwünscht. Das Erkennen von "Bottlenecks" in einer Fertigungslinie wird heute durch aufwendige Simulationen realisiert. Das Aufheben der "Bottlenecks" erfolgt dann durch das aufwendige Verändern der Applikationslogik durch den Applikationsentwickler oder durch das kostenintensive Hinzufügen von parallelen Fertigungslinien oder durch Austausch der Fertigungsstationen oder Transportsysteme durch leistungsfähigere Maschinen.

Eine derart programmierte Fertigungslinie ist auch unflexibel, weil diese durch die Programmierung stark ans Produkt gekoppelt ist. Die Umstellung der Fertigungsanlage von einem Produkt auf ein anderes muss aufwendig manuell umprogrammiert werden. Fällt ein Teil der Fertigungslinie aus, beispielsweise ein Transportweg oder eine Fertigungsstation, dann kann das zum Stillstand der ganzen Fertigungslinie und damit zu hohen Fertigungsausfällen führen.

Stand der Technik ist z.B. Kai Ding ET AL: "Defining a Digital Twin-based Cyber-Physical Production System for autonomous manufacturing in smart shop floors", INTERNATIONAL JOURNAL OF PRODUCTION RESEARCH, Bd. 57, Nr. 20, 16. Januar 2019 (2019-01-16), Seiten 6315-6334, GB, ISSN: 0020-7543, DOI: 10.1080/00207543.2019.1566661.

Es ist daher eine Aufgabe der gegenständlichen Erfindung, die Planung und die Umsetzung der Fertigung eines Produktes in einer Fertigungsanlage zu verbessern.

Diese Aufgabe wird durch die Merkmale der unabhängigen Ansprüche gelöst. Durch das erfindungsgemäße Vorgehen ist es nicht mehr erforderlich, die Anlagensteuerung händisch auszuprogrammieren. Abgesehen davon können beliebig komplexe Maschinennetzwerke der Fertigungsanlage verwendet werden, weil durch die Verknüpfung das Maschinennetzwerk vollständig ausgenutzt werden kann. Das kann für jedes einzelne Produkt gemacht werden, womit sich die Flexibilität der Fertigung erhöht. Abgesehen davon können mit der Verknüpfung auf einfache Weise ein optimaler Produktfluss durch das Maschinennetzwerk, die Priorisierung von Produkten in der Herstellung und/oder eine Auslastungsverteilung der Fertigungsknoten im Maschinennetzwerk realisiert werden. Bisher übliche starre Produktionslinien für ein Produkt werden damit aufgebrochen und die Fertigung auf Produktebene flexibilisiert.

Ein weiterer wesentlicher Vorteil der Erfindung liegt darin, dass die Herstellung des Produktes auch simuliert werden kann. Es muss also kein reales Produkt hergestellt werden, sondern es kann auch nur ein fiktives Produkt hergestellt werden. Zur Simulation der Herstellung werden geeignete Simulationsmodelle der Fertigungsknoten des Maschinennetzwerkplanes verwendet. Damit lassen sich neue Fertigungsanlagen hinsichtlich der Fertigung bestimmter Produkte (Produktsynthesepläne) besser planen oder bestehende Fertigungsanlagen optimieren. Es lässt sich damit auch eine Machbarkeitsanalyse durchführen, also ob ein bestimmtes Produkt auf einem bestehenden Maschinennetzwerkplan (der sehr komplex sein kann) überhaupt herstellbar ist.

In einer besonders vorteilhaften Ausgestaltung wird jedem Fertigungsknoten des Maschinennetzwerkplanes ein Fertigungsaufwandswert zugeordnet und es wird ein Optimalitätskriterium, ein Fertigungsaufwand als Summe der Fertigungsaufwandswerte der an der Fertigungsabfolge beteiligten Fertigungsknoten, ermittelt. Damit können auf einfache Weise schon bei der Verknüpfung Qualitätskriterien hinsichtlich der Herstellung berücksichtigt werden. Damit kann eine Fertigungsabfolge für ein Produkt ausgewählt werden, die ein bestimmtes Qualitätskriterium erfüllt. Je nach gewünschten Qualitätskriterium können sich damit auch unterschiedliche Fertigungsabfolgen ergeben. Die Flexibilität kann dabei noch erhöht werden, wenn die Fertigungsaufwandswerte mit Gewichten versehen werden. Ein Fertigungsaufwandswert kann sich im Verlauf der Zeit auch ändern, beispielsweise kann sich die benötigte Zeit für einen Fertigungsprozessschritt mit Verschleiß einer Fertigungsstation, beispielsweise der Verschleiß eines spanenden Werkzeugs einer Werkzeugmaschine, erhöhen, um eine gleichbleibende Qualität sicherzustellen.

Ganz besonders vorteilhaft ist es, wenn während oder nach der Durchführung eines Fertigungsprozessschrittes an einem Fertigungsknoten der Fertigungsabfolge die Fertigungsabfolge für das Produkt durch erneutes Verknüpfen des Produktsyntheseplanes und Maschinennetzwerkplanes neu ermittelt wird und die weitere Herstellung des Produktes mit der neuen Fertigungsabfolge durchgeführt wird. Auf diese Weise kann während der Herstellung des Produktes auf Änderungen im Maschinennetzwerk, beispielsweise ein Ausfall eines Fertigungsknotens (auch durch Wartung), eine sich veränderte Auslastungssituation der Fertigungsknoten usw., reagiert werden. Damit kann die Ausfallsicherheit der Fertigung erhöht werden.

Die gegenständliche Erfindung wird nachfolgend unter Bezugnahme auf die Figuren 1 bis 10 näher erläutert, die beispielhaft, schematisch und nicht einschränkend vorteilhafte Ausgestaltungen der Erfindung zeigen. Dabei zeigt
Fig.1 bis 4 Beispiele eines Maschinennetzwerkplanes,
Fig.5 und 6 Beispiele eines Produktsyntheseplanes,
Fig.7 eine Verknüpfung eines Maschinennetzwerkplanes mit einem Produktsyntheseplan,
Fig.8 die Verknüpfung und Verwendung einer Fertigungsabfolge zur Steuerung einer Fertigungsanlage,
Fig.9 ein Beispiel einer Verknüpfung eines Maschinennetzwerkplanes mit einem Produktsyntheseplan und
Fig.10 eine resultierende Fertigungsabfolge.

Die gegenständliche Erfindung beruht darauf, dass in einer Fertigungsanlage ein Endprodukt hergestellt wird, indem an Zwischenprodukten eine Folge von Fertigungsprozessschritte (Montageschritte, Transformationen etc.) an Fertigungsstationen durchgeführt werden. Der Transport eines Zwischenprodukts zwischen aufeinanderfolgenden Fertigungsstationen wird von Transporteinheiten ausgeführt. Im Folgenden wird häufig nur mehr "Produkt" verwendet, wobei "Produkte" sowohl Zwischenprodukte beim Durchlaufen der Fertigungsanlage umfasst, als auch das am Ende hergestellte Endprodukt.

Die Fertigung eines Produktes wird erfindungsgemäß mit einem Produktsyntheseplan S und einem Maschinennetzwerkplan M modelliert.

Der Maschinennetzwerkplan M modelliert eine Fertigungsanlage, also die für die Fertigung zur Verfügung stehende Fertigungshardware. Hierbei ist zu beachten, dass eine Fabrik mehrere Fertigungsanlagen enthalten kann und eine ganze Fabrik daher auch durch mehrere Maschinennetzwerkpläne M abgebildet werden kann. Ein Maschinennetzwerkplan M ist als Netzwerk von Fertigungsknoten 1 modelliert, wobei ein Fertigungsknoten 1 eine Fertigungsstation und/oder eine Transporteinheit darstellt. An einer Fertigungsstation wird auf das Produkt eingewirkt und dieses verändert, beispielsweise indem am Produkt zumindest ein Fertigungsprozessschritt ausgeführt wird. Eine Transporteinheit realisiert eine Transportfunktion, um das Produkt durch die Fertigungsanlage zu bewegen. Eine Fertigungsstation des Maschinennetzwerkplanes M kann auch eine Transporteinheit enthalten und eine Transportfunktion realisieren, indem die Fertigungsstation die Weiterbewegung zum nächsten Fertigungsknoten 1 realisiert oder das Abholen des Produktes von einer vorgehenden Fertigungsknoten 1 realisiert. Eine Transporteinheit kann auch einen Fertigungsprozessschritt ausführen, beispielsweise den Schritt des Abkühlens des Produktes während des Transportes. Die Verbindung der Fertigungsknoten 1 des Maschinennetzwerkplans durch Kanten entspricht dem möglichen Fluss des Produktes durch die Fertigungsanlage, wobei ein Pfeil als Kante die mögliche Bewegungsrichtung angibt. Eine Kante zwischen zwei Fertigungsknoten 1 bedeutet, dass ein Produkt zwischen diesen Fertigungsknoten 1 bewegbar ist, entweder in einer bestimmten Richtung oder in beiden Richtungen. Transporteinheiten können beispielsweise Förderbänder, Roboter, Lineartransportsysteme wie ein Langstatorlinearmotor, autonome Fahrzeuge (AGV's), Planarmotoren usw. sein, insbesondere also jegliche Transportsysteme, welche einen Produktfluss ermöglichen. Kann ein Fertigungsknoten 1 das Produkt verändern, Produkte zusammenführen oder zerteilen, dann spricht man auch von einem Prozessknoten P (Fertigungsstation oder Fertigungsstation mit Transporteinheit oder Transporteinheit mit einem Fertigungsprozessschritt). Erfüllt der Fertigungsknoten 1 eine reine Transportfunktion, so spricht man auch von einem Transportknoten T.

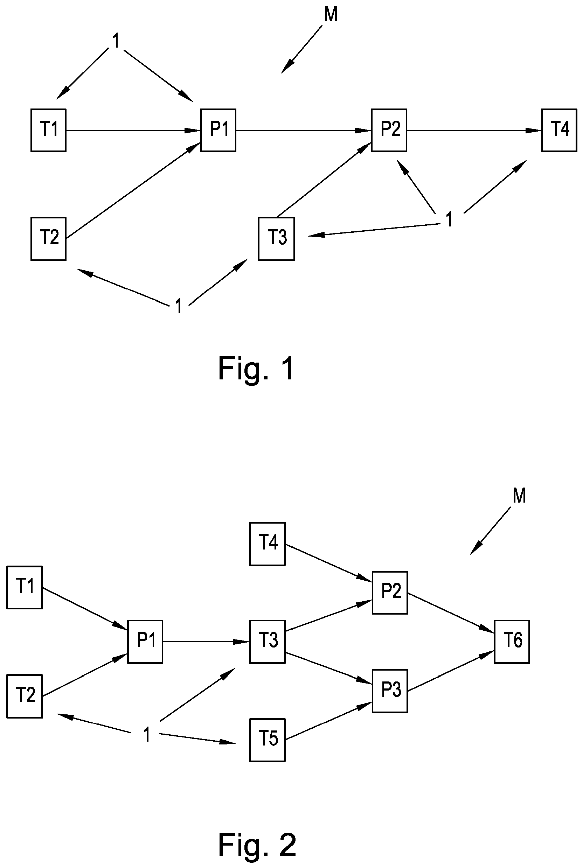

Ein Beispiel eines einfachen Maschinennetzwerkplans M ist in Fig.1 dargestellt. Das Beispiel zeigt ein Maschinennetzwerk zur Verpackung von Flaschen in einer Flaschenverpackungsanlage. Der Transportknoten T1 bringt gefüllte Flaschen in den Prozessknoten P1 ein, in dem die Flaschen etikettiert werden. Dazu werden von einem weiteren Transportknoten T2 Etiketten in den Prozessknoten P1 eingebracht. Die fertig etikettierten Flaschen werden in eine Verpackungsmaschine als Prozessknoten P2 überführt, in dem die etikettierten Flaschen verpackt werden. Dazu werden leere Kartons von einem Transportknoten T3 in den Prozessknoten P2 eingebracht. Die fertige Verpackung wird über den Transportknoten T4 aus der Fertigungsanlage abgeführt.

Das Beispiel für den Maschinennetzwerkplan M nach Fig.1 ist natürlich ein sehr einfaches. Der Maschinennetzwerkplan M kann natürlich je nach Fertigungsanlage wesentlich komplexer sein. Insbesondere können auch mehrere Prozessknoten P vorgesehen sein, die denselben Fertigungsprozessschritt ausführen können. Auch müssen sich nicht immer ein Transportknoten T und ein Prozessknoten P abwechseln. Nicht jeder vorhandene Prozessknoten P des Maschinennetzwerkplanes M muss für die Fertigung des Produktes verwendet werden. Ein Prozessknoten P kann auch vorgesehen sein, um verschiedene Fertigungsschritte, auch an verschiedenen Produkten, auszuführen. Es ist auch möglich, Handarbeitsplätze in das Maschinennetzwerk als Prozessknoten P aufzunehmen. In diesem Falle würde der Prozessschritt durch einen Menschen, gegebenenfalls auch mit Roboter- oder Maschinenunterstützung, ausgeführt werden, wobei eine Anweisungsliste mit den Fertigungsparametern durch das System automatisch erstellt werden kann. Gleichsam könnte ein Prozessknoten P auch auf unterschiedlichen Wegen oder über verschiedene Transportknoten T erreicht werden. Ein Maschinennetzwerkplan M kann auch zur Herstellung verschiedener Produkte geeignet sein. Üblicherweise werde in einem Maschinennetzwerk einer Fertigungsanlage gleichzeitig eine Vielzahl von Produkten, auch verschiedene Produkte, gefertigt.

In Fig.2 ist ein etwas komplexerer Maschinennetzwerkplan M für die Flaschenverpackung dargestellt. In diesem Beispiel ist eine Parallelisierung der Verpackung vorgesehen, in der zwei Prozessknoten P2, P3 als Verpackungsmaschinen vorgesehen sind. Jedem dieser Prozessknoten P1, P2 wird über einen zugeordneten Transportknoten T4, T5 eine Verpackung, z.B. ein Karton, zugeführt. Ein Transportknoten T3 realisiert die Aufteilung des Produktstromes der etikettierten Flaschen vom Prozessknoten P1. Die fertig verpackten Flaschen werden von einem gemeinsamen Transportknoten T6 abgeführt. Anstelle der parallelen Prozessknoten P2, P3, könnte diese mit geeigneten Transporteinheiten, wie z.B. Langstatorlinearmotoren oder Planarmotoren, auch seriell angeordnet sein.

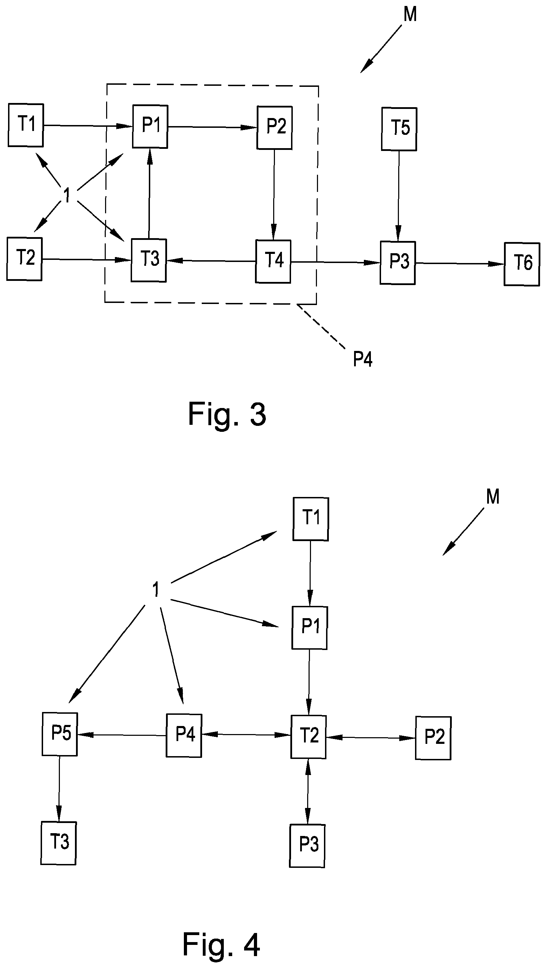

Ein anderes Beispiel eines Maschinennetzwerkplanes M ist in Fig.3 wieder am Beispiel einer Verpackung von Flaschen dargestellt. Die im Prozessknoten P1 etikettierten Flaschen werden einem Prozessknoten P2 zugeführt, in dem eine Inspektion der Flasche stattfindet. Bei einer Etikettierung der Flasche führt der Transportknoten T4 die Flasche dem Prozessknoten P3 zu, in dem die Verpackung stattfindet. Eine nicht etikettierte Flasche wird über den Transportknoten mit dem Zustrom der nicht etikettierten Flaschen vom Transportknoten T2 zusammengeführt. Ein Prozessknoten muss damit nicht zwingend physisch etwas an einem Produkt ändern, beispielsweise die Inspektion, sondern kann beispielsweise lediglich am Datenabbild des Produktes eine Änderung vornehmen, beispielsweise das Ergebnis der Inspektion zum Produkt speichern. Die Fertigungsknoten P1, P2, T3, T4 der Fig.3 können dabei auch als ein Fertigungsknoten (strichlierte Umrandung) aufgefasst werden, in dem verschiedene Prozesse ablaufen.

Es ist auch denkbar, dass ein Transportknoten T für mehrere Prozessknoten P verwendet wird, also dass das Produkt zwischen verschiedenen Prozessknoten P mit derselben Transporteinheit bewegt wird. Das lässt sich beispielsweise mit Langstatorlinearmotoren, Endlosförderer oder Planarmotoren als Transporteinheiten realisieren. Ein Beispiel dafür ist in Fig.4 dargestellt.

Der Transportknoten T2 in Fig.4 ist beispielsweise eine Transporteinheit in Form eines Langstatorlinearmotors, der die Prozessknoten P2, P3, P4 verbindet. Über den Transportknoten T1 wird ein Produkt zugeführt und in einem ersten Prozessknoten P1 bearbeitet. Von dort wird das Produkt über den Transportknoten T2 zu einem zweiten Prozessknoten P2, danach zu einem dritten Prozessknoten P3 und danach zu einem vierten Prozessknoten P4 bewegt. Der vierte Prozessknoten P4 realisiert auch eine Transportfunktion zum nachfolgenden Prozessknoten P5. Alternativ könnte auch der Prozessknoten P5 eine Transportfunktion realisieren, um Produkte vom vorhergehenden Prozessknoten P4 zu holen. Vom Prozessknoten P5 kann das Produkt über einen weiteren Transportknoten T3, beispielsweise ein Roboter, abtransportiert werden.

Die Modellierung der Fertigungsanlage mittels eines Maschinennetzwerkplan M als Netzwerk von Fertigungsknoten 1 und Kanten ermöglicht auch die Verschachtelung von Maschinennetzwerkplänen M. Beispielsweise kann sich hinter einem Prozessknoten P wieder ein Maschinennetzwerkplan M verbergen. Das ist in Fig.3 angedeutet, wobei die strichliert eingefassten Fertigungsknoten 1 als ein Prozessknoten P4 dargestellt werden könnten und der Prozessknoten P4 wiederum ein Maschinennetzwerkplan M wäre. Auf diese Weise kann eine Fertigungsanlage auch übersichtlich hierarchisch modelliert werden. Das erleichtert die Handhabung von insbesondere sehr großen Maschinennetzwerkplänen M, wobei ein verschachtelter Maschinennetzwerkplan M natürlich letztendlich auch nur ein einziger Maschinennetzwerkplan M ist.

Der Produktsyntheseplan S beschreibt das Produkt selbst, insbesondere den hierarchischen Aufbau des Endproduktes als Ergebnis der Fertigung durch einzelne Zwischenprodukte, welche in einer Verkettung von Fertigungsprozessschritten zusammengeführt werden. Der Produktsyntheseplan S beschreibt also in welchen Teilschritten unter Zusammenführung von welchen Teilprodukten die Herstellung des Produktes erfolgen soll. Für jedes verschiedene Produkt, das in der Fertigungsanlage, bzw. auf dem Maschinennetzwerkplan M, gefertigt werden soll, gibt es einen Produktsyntheseplan S. Gleiche Produkte können natürlich auf denselben Produktsyntheseplan S zurückgreifen.

Der Produktsyntheseplan S ist als Baum von Produktsyntheseknoten 2 dargestellt. Die Produktsyntheseknoten 2 des Baumes können Produktknoten I sein, die das Produkt (Zwischenprodukt, Endprodukt) darstellen, oder Operationsknoten O, welche ein Produkt oder mehrere Produkte durch einen Fertigungsprozessschritt in ein anderes Produkt oder mehrere andere Produkte umwandeln. Eine Kante im Baum (Verbindung zwischen Knoten) stellt die Beziehung zwischen Produktsyntheseknoten 2 dar und kann auch mit einer Zahl ergänzt werden, um darzustellen wie viele Produkte vom gleichen Typ ein Operationsknoten O verwendet, um ein neues Produkt zu erzeugen.

Der Produktsyntheseplan S kann mit speziellen Operationsknoten O beginnen und enden. Der Produktsyntheseplan S beginnt vorzugsweise mit zumindest einer Operationsquelle, die ein Produkt einbringt. Ein solcher Operationsknoten O hat keinen Eingang, sondern nur einen Ausgang für das eingebrachte Produkt. Der Produktsyntheseplan S endet vorzugsweise mit zumindest einer Operationssenke, die das hergestellte Endprodukt repräsentiert. Ein solcher Operationsknoten O hat keinen Ausgang, sondern nur einen Eingang. Die Verwendung von Operationsquellen und Operationssenken erlaubt die Verschachtelung von Produktsyntheseplänen S. Dabei könnte beispielsweise eine Operationsquelle oder Operationssenke wieder einen Produktsyntheseplan S aufweisen, beispielsweise wie eine Flasche hergestellt wird oder eine Etikette gedruckt und gestanzt wird oder wie die hergestellte Verpackung weiterverarbeitet wird.

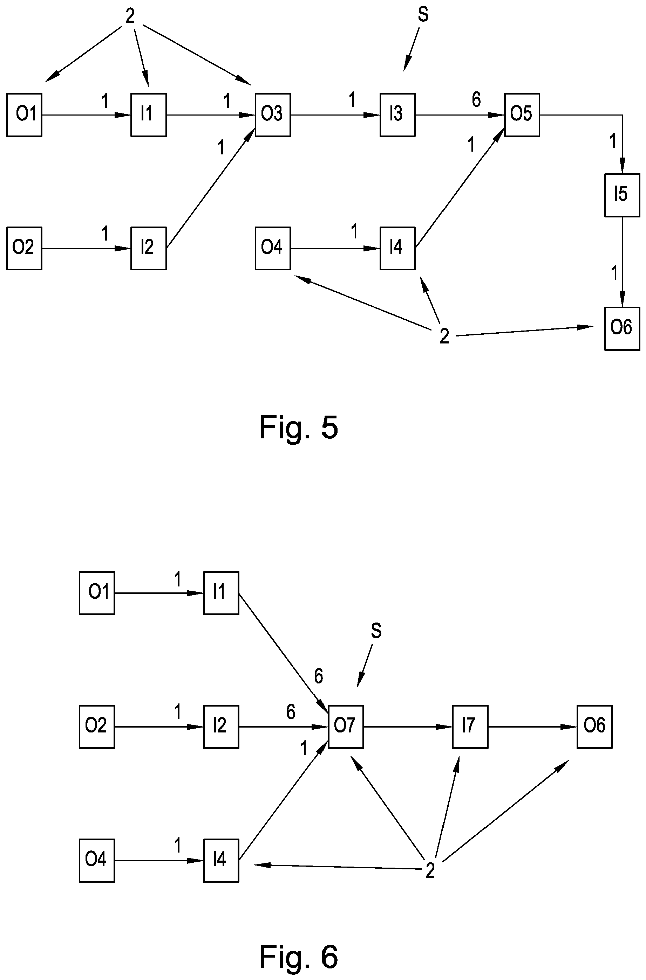

Ein Beispiel eines Produktsyntheseplans S ist in Fig.5 dargestellt mit einer Anzahl von Produktsyntheseknoten 2, die durch Kanten verbunden sind. Dieses Beispiel zeigt einen Produktsyntheseplan S für eine Sechserpackung von etikettierten Flaschen. Die Operationsknoten O1, O2, O4 sind Operationsquellen und der Operationsknoten O6 eine Operationssenke. Der Operationsknoten O3 nimmt eine Flasche von der Operationsquelle O1, die über den Produktknoten I1 bereitgestellt wird, und eine Etikette von der Operationsquelle O2, die über den Produktknoten I2 bereitgestellt wird. Der Operationsknoten O3 erzeugt eine etikettierte Flasche, die über den Produktknoten I3 zur Verfügung steht. Der Operationsknoten O5 erzeugt aus sechs etikettierten Flaschen vom Produktknoten I3 und einer Verpackung vom Produktknoten I4, der von der Operationsquelle O4 bereitgestellt wird, eine Verpackung, die am Produktknoten I5 vorliegt und über die Operationssenke O6 vorliegt.

Der Produktsyntheseplan S nach Fig.5 könnte natürlich gleichwertig auch auf andere Weise dargestellt werden, wie beispielsweise in Fig.6 dargestellt ist. Hier ersetzt ein Operationsknoten O7 die Operationsknoten O3, O5 aus dem Produktsyntheseplan S der Fig.4.

Der Produktsyntheseplan S bietet noch einen anderen Vorteil. Wird der Produktsyntheseplan S rückwärts, also z.B. startend bei einer Operationssenke, durchlaufen, so erhält man eine Stückliste des Produkts, also alle Ausgangsprodukte, die zur Herstellung des Produktes benötigt werden.

Der Maschinennetzwerkplan M und/oder der Produktsyntheseplan S können von einem Applikationsentwickler erstellt werden. Für den Maschinennetzwerkplan M ist natürlich die Kenntnis der Fertigungsanlage(n) erforderlich und kann entsprechend durch Fertigungsknoten 1 und Kanten in Form eines Netzwerkes modelliert werden. Ein Produktsyntheseplan S kann für jedes zu erzeugende Produkt erstellt werden, beispielsweise wieder von einem Applikationsentwickler. Es können auch vorgefertigte Produktsynthesepläne S für verschiedene Produkte gespeichert sein, die bei Bedarf aufgerufen werden können. Der Aufwand für die Erstellung des Maschinennetzwerkplanes M und eines Produktsyntheseplanes S fällt daher grundsätzlich nur einmal an.

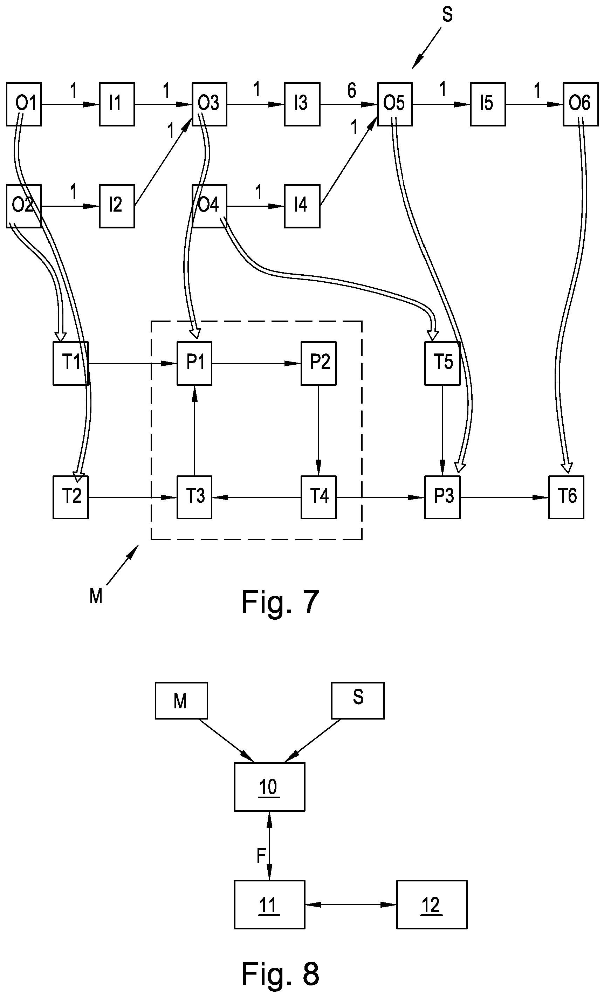

Der erfindungswesentliche Schritt liegt in der automatisierten, insbesondere softwarebasierten, Verknüpfung des Maschinennetzwerkplanes M und des Produktsyntheseplanes S. Bei dieser Verknüpfung werden die Operationsknoten O des Produktsyntheseplans S verfügbaren Fertigungsknoten 1, insbesondere Transportknoten T und Prozessknoten S, des Maschinennetzwerkplanes M zugeordnet, wie in Fig.7 durch die Pfeile zwischen dem Maschinennetzwerkplan M nach Fig.3 und dem Produktsyntheseplan S nach Fig.5 angedeutet wird. Jedem Operationsknoten O wird bei der Verknüpfung natürlich ein Fertigungsknoten 1 zugeordnet, der den am jeweiligen Operationsknoten O erforderlichen Fertigungsprozessschritt am Produkt ausführen kann. Bei der Verknüpfung werden auch nur solche Fertigungsknoten 1 aus dem Maschinennetzwerkplan M verwendet, die einen durchgehenden Produktfluss durch den Maschinennetzwerkplan M mit den verfügbaren Transporteinheiten (Transportknoten T oder Proessknoten P mit einer Transporteinheit) in der Fertigungsanlage ermöglichen. Im Wesentlichen bedeutet das, dass die in der Verknüpfung ausgewählten Fertigungsknoten 1 wieder ein Netzwerk bilden, dessen Fertigungsknoten 1 durch Kanten verbunden sind. Das Ergebnis der Verknüpfung ist eine Fertigungsabfolge F als Netzwerk von Fertigungsknoten 1 und Kanten, wobei die Fertigungsabfolge F ein Teilnetzwerk des Maschinennetzwerkplanes M ist. Jeder Fertigungsknoten 1 der Fertigungsabfolge F ist mit zumindest einer Kante mit zumindest einem weiteren Fertigungsknoten 1 verbunden. Eine Fertigungsabfolge F ist damit eine Abfolge von Fertigungsstationen und Transporteinheiten der mit dem Maschinennetzwerkplan M modellierte Fertigungsanlage, die vom Produkt durchlaufen wird, um das Produkt in der Fertigungsanlage herzustellen. Im trivialsten, aber in der Praxis unüblichen, Fall, entspricht die Fertigungsabfolge F dem Maschinennetzwerkplan M. Üblicherweise ist die Fertigungsabfolge F ein Teilnetzwerk des Maschinennetzwerkplanes M.

Es kann für jedes herzustellende Produkt eine eigene Fertigungsabfolge F geben. Das bedeutet, dass gleiche Produkte auf verschiedene Weise in der Fertigungsanlage hergestellt werden können, beispielswiese mit verschiedenen Fertigungsstationen oder mit verschiedenen Transporteinheiten. Selbstverständlich können gleiche Produkte aber auch mit derselben Fertigungsabfolge F hergestellt werden.

Enthält der Maschinennetzwerkplan M genau einen Transportknoten T oder Prozessknoten P für jeden Operationsknoten O (wie in Fig.7) ist diese Zuordnung natürlich einfach.

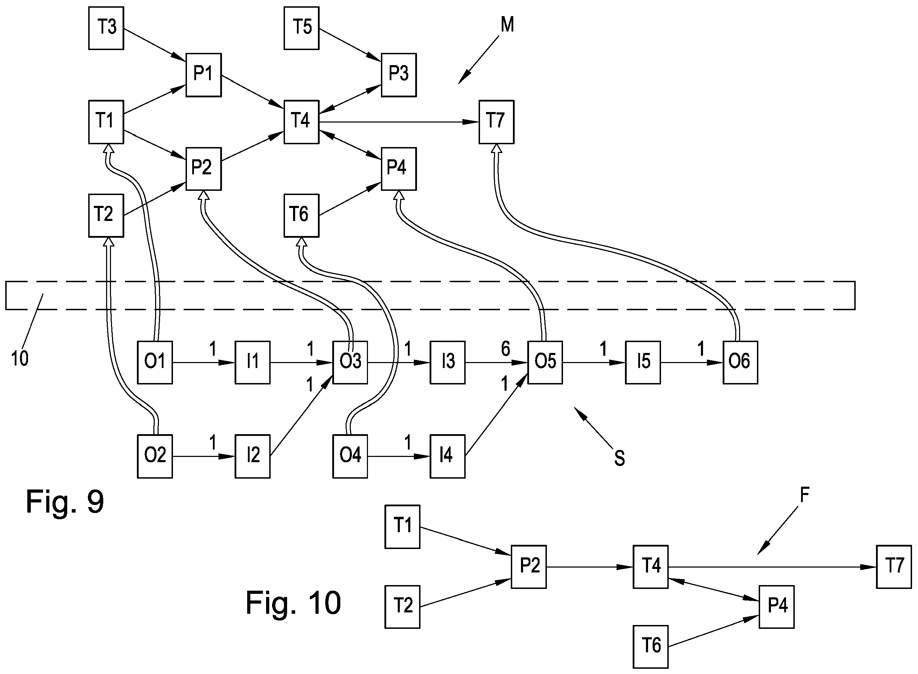

Üblicherweise, und darauf zielt die Erfindung im Wesentlichen ab, ist es aber so, dass ein Maschinennetzwerkplan M eine Mehrzahl von Transportknoten T oder Prozessknoten P aufweist, die für einen Fertigungsprozessschritt im Produktsyntheseplan S, also für einen Operationsknoten O, genutzt werden können (wie in Fig.9). Beispielsweise könnte ein Fertigungsprozessschritt mit verschiedenen verfügbaren Prozessknoten P des Maschinennetzwerkplanes M realisiert werden, oder ein Prozessknoten P des Maschinennetzwerkplanes M könnte über verschiedene verfügbare Transportknoten T erreicht werden. In diesem Fall muss für jeden Operationsknoten O des Produktsyntheseplanes S ein Fertigungsknoten 1 (Prozessknoten P oder Transportknoten T) des Maschinennetzwerkplanes M ausgewählt werden, der den jeweiligen Fertigungsprozessschritt ausführt. Auf diese Weise wird für jedes Produkt ein individueller Pfad durch das verfügbare Maschinennetzwerk in der Fertigungsanlage, das durch den Maschinennetzwerkplan M modelliert ist, ermittelt. Dieser Pfad kann auch verzweigt sein oder aus mehreren zusammenhängenden Zweigen bestehen, also allgemein ein Netzwerk darstellen. Dieses individuelle Netzwerk stellt dann die Fertigungsabfolge F zur Herstellung des Produktes dar, die dann in der Fertigungsanlage 12 ausgeführt werden kann. Eine derart erstellte Fertigungsabfolge F muss daher nicht mehr eine Linie sein, wie bisher üblich, sondern kann ein beliebiges Netzwerk im verfügbaren Maschinennetzwerk sein.

Das wird schematisch mit Fig.8 erläutert. Ein Maschinennetzwerkplan M und ein Produktsyntheseplan S wird einer Verknüpfungseinheit 10 zugeführt, in der der Maschinennetzwerkplan M und der Produktsyntheseplan S wie beschrieben verknüpft werden. Die Verknüpfungseinheit 10 ist eine Computerhardware und/oder Computersoftware. Das Ergebnis ist eine Fertigungsabfolge F, die in einer Anlagensteuerung 11 (Computerhardware und/oder Computersoftware) der Fertigungsanlage 12 verwendet wird, um die Herstellung des Produktes an der Fertigungsanlage 12 zu steuern.

An dieser Stelle sei angemerkt, dass für jeden Fertigungsknoten 1 des Maschinennetzwerkplanes M natürlich auch die erforderlichen Daten gespeichert sind, beispielsweise in der Anlagensteuerung 11 und/oder direkt in der Fertigungsabfolge F, um den Fertigungsknoten 1 für das jeweilige Produkt betreiben zu können. Solche Daten können Steuerprogramme sein, aber auch Prozessparameter (die auch vom jeweiligen Produkt abhängig sein können) oder ähnliches. Damit kann die Anlagensteuerung 11 auch auf diese Daten zugreifen, um die Fertigungsanlage 12 entsprechend anzusteuern. Nachdem es aber auf die konkrete Realisierung der Anlagensteuerung der Fertigungsanlage 12 nicht ankommt und die Möglichkeiten hierfür hinlänglich bekannt sind, wird hier nicht näher darauf eingegangen.

Beim Schritt der Verknüpfung kann durch die Verknüpfungseinheit 10 zuerst geprüft werden, ob ein Produktsyntheseplan S überhaupt auf einem Maschinennetzwerkplan M realisiert werden kann. Hierfür kann beispielsweise aus dem Produktsyntheseplan S zuerst eine Stückliste aller für die Herstellung des Produktes (Operationssenke) benötigten Ausgangsprodukte (Operationsquellen) ermittelt werden. Eine solche Stückliste kann beispielsweise derart ermittelt werden, dass der Produktsyntheseplan S rückwärts, also beginnend mit dem Produkt (Operationssenke) durchlaufen wird. Eine derartige Stückliste kann aber natürlich mit dem oder zu einem Produktsyntheseplan S schon gespeichert sein. Es kann dann geprüft werden, ob jede Operationsquelle im Produktsyntheseplan S von einem Fertigungsknoten 1 im Maschinennetzwerkplan M angeboten wird. Ist das nicht der Fall, dann kann der Produktsyntheseplan S auf dem Maschinennetzwerkplan M nicht realisiert werden.

Da aber nicht jeder Fertigungsknoten 1 im Maschinennetzwerkplan M auf beliebige Weise und von jedem anderen Fertigungsknoten 1 erreichbar sein muss, ist diese Prüfung üblicherweise nicht hinreichend. Es wird daher auch geprüft, ob die Fertigungsprozessschritte aus dem Produktsyntheseplan S auf Fertigungsknoten 1 des Maschinennetzwerkplanes M unter Berücksichtigung der möglichen Transportwege (Kanten im Netzwerk) im Maschinennetzwerkplan M ausgeführt werden können. Hierbei kann man die möglichen Abbildungen des Produktsyntheseplanes S auf den Maschinennetzwerkplan M beispielsweise durchprobieren. Das kann automatisiert und softwaregestützt z.B. mittels sogenannter bekannter und verfügbarer SMT (Satisfiability Modulo Theories) Solver (Computerhardware und/oder Computersoftware) erfolgen. Dieser ermittelt alle möglichen Lösungen der Verknüpfung oder stellt die Nichtausführbarkeit der Abbildung fest. Aus den möglichen Lösungen kann dann eine als Fertigungsabfolge F ausgewählt werden.

Eine andere Möglichkeit der Durchführung der Verknüpfung in der Verknüpfungseinheit 10 liegt darin, dass der Produktsyntheseplan S rückwärts propagiert wird. Auch hierbei werden wieder alle möglichen Abbildungen des Produktsyntheseplanes S auf den Maschinennetzwerkplan M ermittelt. Bei diesem Ansatz wird jeder Zwischenschritt des Produktsyntheseplan S einzeln betrachtet. Jeder Zwischenschritt umfasst einen Operationsknoten O, der eine Anzahl von Zwischenprodukten (stromaufwärtsliegende Produktknoten I) verarbeitet, um ein Produkt (stromabwärtsliegender Produktknoten I) zu erzeugen. Nachdem der Produktsyntheseplan S rückwärts durchlaufen wird, ist für jedes mit einem Operationsknoten O zu erzeugende Produkt auch der folgende Fertigungsknoten 1 (Zielknoten) im Maschinennetzwerkplan M bekannt, weil dieser schon im Schritt davor festgelegt wurde. Es kann nun für jeden Operationsknoten O im Produktsyntheseplan S geprüft werden, ob die für die Durchführung des aktuellen Prozessschrittes des Operationsknotens O zur Herstellung des Produktes benötigten Zwischenprodukte im Maschinennetzwerk M herstellbar sind, sodass gleichzeitig bei der Herstellung der Zielknoten im Maschinennetzwerkplan M erreichbar ist. Es wird also geprüft, ob vom dem Operationsknoten O zugeordneten Fertigungsknoten 1 der bekannte folgende Fertigungsknoten 1 erreicht werden kann, also beispielsweise ob es im Maschinennetzwerkplan M eine Kante dazwischen gibt. Dabei kann es natürlich mehrere mögliche Realisierungen geben. Bekannte Ansätze (z.B. Backtracking Algorithmen) erlauben die erschöpfende Enumeration aller Möglichkeiten, aus denen dann eine mögliche Lösung der Verknüpfung als Fertigungsabfolge F ausgewählt werden kann.

Grundsätzlich könnte eine beliebige Lösung aus den möglichen Lösungen der Verknüpfung ausgewählt werden. Es kann aber auch eine nach bestimmten Optimalitätskriterien optimale Lösung aus den möglichen Lösungen ausgewählt werden. Dazu wird ein Optimalitätskriterium festgelegt und diejenige Lösung ausgewählt, die das Optimalitätskriterium bestmöglich erfüllt. In der Regel wird das Optimalitätskriterium ein Wert sein und man wird das Optimalitätskriterium mit dem minimalen oder maximalen Wert auswählen.

Für die Auswahl einer möglichen Lösung in der Verknüpfungseinheit 10 kann beispielsweise jedem Fertigungsknoten 1 des Maschinennetzwerkplanes M ein Fertigungsaufwandswert zugeordnet werden. Ein Fertigungsaufwandswert kann eine Zeit sein, die benötigt wird, um einen Prozessschritt oder Transportschritt auszuführen. Ein Fertigungsaufwandswert kann aber auch Kostenwert sein, der die Kosten für einen Prozessschritt oder Transportschritt angibt. Der Kostenwert kann ein Geldwert sein oder auch ein abstrakter Kostenwert. Beispielsweise könnte ein Kostenwert für die Herstellung eines Produktes an einem manuellen Arbeitsplatz niedriger sein, als an einer Hochleistungsmaschine, die aber dafür umgerüstet werden muss, wenn die Stückzahl gering ist. Bei hohen Stückzahlen könnte es umgekehrt sein. Ein Fertigungsaufwandswert kann aber auch ein Energiewert sein, der die aufzuwendende Energie, beispielsweise die elektrische Energie, für einen Prozessschritt oder Transportschritt angibt. Ein Fertigungsaufwandswert kann auch ein Auslastungswert eines bestimmten Transportknotens T oder Prozessknotens S sein, beispielsweise um die Wartungsintervalle zu reduzieren oder um die Prozessknoten S gleichmäßig auszulasten. Natürlich können auch mehrere verschiedene Fertigungsaufwandswerte gleichzeitig betrachtet werden. Ein bestimmter Fertigungspfad F durch den Maschinennetzwerkplan M führt damit zu einem Fertigungsaufwand als Summe der Fertigungsaufwandswerte der beteiligten Fertigungsknoten 1. Werden verschiedene Fertigungsaufwandswerte berücksichtigt, dann können diese in beliebiger Weise arithmetisch verknüpft werden, um einen Fertigungsaufwand zu ermitteln. Beispielsweise könnte als Fertigungsaufwand eine gewichtete Summe der verschiedenen Fertigungsaufwandswerte berechnet werden, wobei jedem Fertigungsaufwandswert ein Gewicht zugeordnet oder vorgegeben wird. Dabei können verschiedene Fertigungsknoten 1 mit verschiedenen Gewichten gewichtet sein und/oder verschiedene Fertigungsaufwandswerte eines Fertigungsknoten 1 mit verschiedenen Gewichten gewichtet sein. Es kann dann diejenige Lösung aus den möglichen Lösungen ausgewählt werden, die den minimalen oder maximalen Fertigungsaufwand (Optimalitätskriterium) ergibt.

Was dieses Vorgehen auszeichnet ist, dass sehr komplexe Topologien von Fertigungsanlagen 12, also sehr komplexe Maschinennetzwerkpläne M, mit komplexen und variablen Fertigungsabfolgen, auch mit Transportwegen mit Rundläufen, Weichen oder frei wählbare Transportwegen, und auch mit einer hohen Anzahl von Fertigungsknoten 1 beherrschbar werden. Damt löst man sich auch vom bisher üblichen Vorgehen, dass Transportabfolgen in einer Fertigungsanlage 12 immer in einer Linie aufgebaut werden. Mit der Erfindung ist es möglich, die Fertigungsabfolge F für die Herstellung des Produktes flexibler zu erstellen und insbesondere auch hinsichtlich bestimmter Kriterien zu optimieren.

Die Verknüpfungseinheit 10 kann für die Verknüpfung auch Information aus der Fertigungsanlage 12 und/oder der Anlagensteuerung 11 berücksichtigen, beispielsweise eine aktuelle Auslastung oder den Ausfall eines Prozessknotens P oder Transportknotens T.

Die Fertigungsabfolge F zur Herstellung des Produktes kann einmal erstellt werden und kann dann mit der Anlagensteuerung 11 an der Fertigungsanlage 12 ausgeführt werden. Es ist aber auch denkbar, die Fertigungsabfolge F, oder den noch verbleibenden Teil davon, nach jedem Fertigungsknoten 1 im Maschinennetzwerkplan M, also nachdem der Fertigungsprozessschritt im Fertigungsknoten 1 abgeschlossen wurde oder auch schon während des Fertigungsprozessschrittes im Fertigungsknoten 1, wie beschrieben neu zu ermitteln. Auf diese Weise kann in Echtzeit auf sich veränderte Zustände der beteiligten Fertigungsknoten 1 (Prozessknoten P oder Transportknoten T) des Maschinennetzwerkplanes M reagiert werden. Ist die Auslastung eines Fertigungsknoten 1 einer Fertigungsanlage 12 beispielsweise zu hoch, oder ist ein Fertigungsknoten 1 ausgefallen, wird dadurch automatisch eine Umgehung gesucht, um das Produkt mit den in der Fertigungsanlage 12 verfügbaren Fertigungsknoten 1 mit einer adaptierten Fertigungsabfolge F herzustellen. Damit kann beispielsweise ein Fertigungsknoten 1 im Störungsfall umgangen werden, so dass es zu keinem Stillstand in der Fertigung kommt.

Mit Fig.9 wird die Verknüpfung an einem weiteren Beispiel erläutert. Es wird wieder ein Produktsyntheseplan S wie in Fig.5 zur Herstellung einer Verpackung aus sechs etikettierten Flaschen verwendet. Der Maschinennetzwerkplan M ist in diesem Fall aber komplexer und umfasst parallele Fertigungsstationen. Beispielsweise sind zwei Etikettierstationen (Prozessknoten P1, P2) vorgesehen. Beide erhalten die nicht etikettierten Flaschen aus demselben Transportknoten T1 und Etiketten aus verschiedenen Transportknoten T2, T3. Ebenso sind zwei Abpackstationen (Prozessknoten P3, P4) vorgesehen, die jeweils aus einem zugeordneten Transportknoten T5, T6 leere Verpackungen erhalten. Ein Transportknoten T4 verbindet alle Prozessknoten P1, P2, P3, P4. Ein solcher Transportknoten T4 ist beispielsweise eine Transporteinheit in Form eines Langstatorlinearmotors mit Weichen, die verschiedene Transportpfade des Langstatorlinearmotors verbinden. Der Transportknoten T4 transportiert die fertige Verpackung auch zum Transportknoten T7, an dem diese Fertigungsanlage abgeführt wird.

Durch die Verknüpfung (angedeutet mit der Verknüpfungseinheit 10) wird jedem Operationsknoten O des Produktsyntheseplanes S ein passender Fertigungsknoten 1 aus dem Maschinennetzwerkplan M zugeordnet. Beispielsweise wird die Operationsquelle O1, die das Einbringen der nicht etikettierten Flasche repräsentiert, der Transportknoten T1 des Maschinennetzwerkplanes M zugeordnet, mit dem eine nicht etikettierte Flasche zugeführt wird. Gleiches gilt für die Operationsquelle O2 und dem Transportknoten T2 zum Zuführen einer Etikette. Anstelle des Transportknoten T2 hätte aber auch der Transportknoten T3 ausgewählt werden können, der dieselbe Aufgabe verrichtet. Zum Fertigungsprozessschritt des Etikettierens kommen die zwei Prozessknoten P1, P2 in Frage, die beide diesen Fertigungsprozessschritt ausführen können. Es kann aber nur der Prozessknoten P2 ausgewählt werden, weil der Prozessknoten P1 vom bereits ausgewählten Transportknoten T2 nicht erreichbar ist, da der Transportknoten T2 mit dem Prozessknoten P über keine Kante verbunden ist und damit kein Transportweg zwischen diesen beiden Fertigungsknoten existiert. Für die Operationsknoten O4 und O5 könnten wieder verschiedene Fertigungsknoten, nämlich die Transportknoten T5, T6 und die Prozessknoten P3, P4 ausgewählt werden. Wenn aber der Transportknoten T6 ausgewählt wird, dann wird vorzugsweise der Prozessknoten P4 ausgewählt, da das den kürzesten Transportweg darstellt (was beispielsweise über einen entsprechenden Fertigungsaufwandswert für die Transportzeit oder für den Transportweg abgebildet werden kann). Es könnte zwar auch der Prozessknoten P3 verwendet werden, weil dieser vom Transportknoten T6 über den Transportknoten T4 erreichbar ist, nur würde das einen längeren Transportweg und eine längere Transportzeit bedeuten. Wird für diese beiden Möglichkeiten ein Fertigungsaufwand ermittelt, dann wird wahrscheinlich der Prozessknoten P4 ausgewählt werden. Das Ergebnis der Verknüpfung ist eine Fertigungsabfolge F wie beispielsweise in Fig.10 dargestellt. Dieses Beispiel verdeutlicht, dass es für einen Produktsyntheseplan S verschiedene Fertigungsabfolgen F im Maschinennetzwerkplan M gegeben kann. Ebenso kann die Fertigungsabfolge F in Echtzeit verändert werden. Fällt beispielsweise der Prozessknoten P4 aus oder ist die Auslastung des Prozessknotens P4 zu hoch, können die Operationsknoten O4, O5 beispielsweise auf den Transportknoten T5 und Prozessknoten P3 abgebildet werden. Das kann auch für jedes einzelne Produkt gemacht werden, womit die Fertigung eines Produktes sehr flexibel erfolgen kann.

Die Erfindung kann aber auch zur Simulation einer Fertigungsanlage 12 genutzt werden, beispielsweise um eine Fertigungsanlage 12 neu auszulegen, um durch Austausch von Fertigungsknoten 1 zu optimieren, um zu prüfen, ob ein Produkt in einer bestehenden Fertigungsanlage 12 herstellbar ist, um die Kosten der Herstellung eines Produktes in einer Fertigungsanlage 12 zu ermitteln usw. Auch für die Simulation ist nur ein Maschinennetzwerkplan M und ein Produktsyntheseplan S erforderlich. Die ermittelte Fertigungsabfolge F wird hierbei nicht an der realen Fertigungsanlage 12 ausgeführt und ein reales Produkt erzeugt, sondern ein fiktives. Alternativ könnte die Fertigungsanlage ebenso simuliert sein (sogenannter Digital Twin) und die ermittelte Fertigungsabfolge F an der simulierten Fertigungsanlage ausgeführt werden. Die an der Herstellung des Produktes beteiligten Fertigungsknoten 1 werden hierzu in der Simulation durch geeignete mathematische Simulationsmodelle abgebildet, die das reale Verhalten der Fertigungsknoten 1 nachbilden.

Die Simulation kann daher zur Herstellung eines fiktiven Produktes in einer fiktiven, simulierten Fertigungsanlage genutzt werden. Der Ablauf ist dabei der gleiche wie bei der Herstellung eines realen Produktes in einer realen Fertigungsanlage.

## Patentansprüche

1. Verfahren zur Herstellung eines Produktes in einer Fertigungsanlage (12), wobei das Produkt in der Fertigungsanlage (12) in einer Anzahl von Fertigungsstationen, gefertigt wird und zwischen aufeinander folgenden Fertigungsstationen mit Transporteinheiten bewegt wird, **wobei** die Fertigungsanlage (12) mit einem Maschinennetzwerkplan (M) modelliert wird, wobei der Maschinennetzwerkplan (M) die für die Fertigung zur Verfügung stehende Fertigungshardware der Fertigungsanlage (12) modelliert, indem der Maschinennetzwerkplan (M) die Fertigungsanlage (12) als Netzwerk von Fertigungsknoten (1) modelliert und ein Fertigungsknoten (1) eine Fertigungsstation zum Durchführen eines Fertigungsprozessschrittes und/oder eine Transporteinheit zum Bewegen des Produktes darstellt und Fertigungsknoten (1) im Maschinennetzwerkplan (M) durch Kanten verbunden sind, **wobei** das herzustellende Produkt mit einem Produktsyntheseplan (S) modelliert wird, wobei der Produktsyntheseplan (S) den hierarchischen Aufbau des Endproduktes als Ergebnis der Fertigung durch einzelne Zwischenprodukte, welche in einer Verkettung von Fertigungsprozessschritten zusammengeführt werden, beschreibt, indem der Produktsyntheseplan (S) den hierarchischen Aufbau des Produktes in Form eines Baumes von Produktsyntheseknoten (2) modelliert und ein Produktsyntheseknoten (2) einen Operationsknoten (O) oder einen Produktknoten (I) darstellt, wobei an einem Operationsknoten (O) das Produkt durch einen Fertigungsprozessschritt verändert wird, und Produktsyntheseknoten (2) im Produktsyntheseplan (S) durch Kanten verbunden sind, **wobei** der Maschinennetzwerkplan (M) und der Produktsyntheseplan (S) softwarebasiert miteinander zu einer Fertigungsabfolge (F) verknüpft werden, indem für jeden Operationsknoten (O) des Produktsyntheseplanes (S) ein Fertigungsknoten (1) des Maschinennetzwerkplanes (M) ausgewählt wird, der den am jeweiligen Operationsknoten (O) durchzuführenden Fertigungsprozessschritt ausführt, wobei jeder Fertigungsknoten (1) der Fertigungsabfolge (F) mit zumindest einer Kante mit zumindest einem weiteren Fertigungsknoten (1) verbunden ist, sodass die Fertigungsabfolge (F) eine Abfolge von Fertigungsstationen und Transporteinheiten der mit dem Maschinennetzwerkplan (M) modellierte Fertigungsanlage (12) repräsentiert, die vom Produkt durchlaufen wird, um das Produkt in der Fertigungsanlage (12) herzustellen, und **wobei** die Fertigungsabfolge (F) mit einer Anlagensteuerung (11) zur Herstellung des Produktes an der Fertigungsanlage (12) ausgeführt wird.

2. Verfahren nach Anspruch 1, bei dem softwarebasiert alle möglichen Abbildungen des Produktsyntheseplanes (S) auf den Maschinennetzwerkplan (M) ermittelt werden und eine mögliche Abbildung als Fertigungsabfolge (F) ausgewählt wird.

3. Verfahren nach Anspruch 2, bei dem für eine Fertigungsabfolge (F) ein Optimalitätskriterium definiert wird und diejenige Fertigungsabfolge (F) ausgewählt wird, die das Optimalitätskriterium bestmöglich erfüllt.

4. Verfahren nach Anspruch 3, bei dem jedem Fertigungsknoten (1) des Maschinennetzwerkplanes (M) ein Fertigungsaufwandswert zugeordnet wird und als Optimalitätskriterium ein Fertigungsaufwand als Summe der Fertigungsaufwandswerte der an der Fertigungsabfolge (F) beteiligten Fertigungsknoten (1) ermittelt wird.

5. Verfahren nach Anspruch 4, bei dem der Fertigungsaufwandwert eine Zeit oder eine definierter Kostenwert ist.

6. Verfahren nach Anspruch 4 oder 5, bei dem als Fertigungsaufwand eine gewichtete Summe der Fertigungsaufwandswerte der Fertigungsknoten (1) der Fertigungsabfolge (F) ermittelt wird.

7. Verfahren nach einem der Ansprüche 1 bis 6, bei dem während oder nach der Durchführung eines Fertigungsprozessschrittes an einem Fertigungsknoten (1) der Fertigungsabfolge (F) die Fertigungsabfolge (F) für das Produkt durch erneutes Verknüpfen des Produktsyntheseplanes (S) und Maschinennetzwerkplanes (M) neu ermittelt wird und die weitere Herstellung des Produktes mit der neuen Fertigungsabfolge (F) durchgeführt wird.

8. Verfahren nach Anspruch 7, bei dem während oder nach der Durchführung eines Fertigungsprozessschrittes an jedem Fertigungsknoten (1) der Fertigungsabfolge (F) die Fertigungsabfolge (F) für das Produkt neu ermittelt wird.

9. Fertigungsanlage zur Herstellung eines Produktes, wobei eine Anlagensteuerung (11) vorgesehen ist, die eine Anzahl von Fertigungsstationen und Transporteinheiten der Fertigungsanlage (12) zur Herstellung des Produktes steuert, **wobei** die Fertigungsanlage (12) mit einem Maschinennetzwerkplan (M) modelliert ist, wobei der Maschinennetzwerkplan (M) die für die Fertigung zur Verfügung stehende Fertigungshardware der Fertigungsanlage (12) modelliert, indem der Maschinennetzwerkplan (M) die Fertigungsanlage (12) als Netzwerk von Fertigungsknoten (1) modelliert und ein Fertigungsknoten (1) eine Fertigungsstation zum Durchführen eines Fertigungsprozessschrittes und/oder eine Transporteinheit zum Bewegen des Produktes ist und Fertigungsknoten (1) im Maschinennetzwerkplan (M) durch Kanten verbunden sind, **wobei** das herzustellende Produkt mit einem Produktsyntheseplan (S) modelliert ist, wobei der Produktsyntheseplan (S) den hierarchischen Aufbau des Endproduktes als Ergebnis der Fertigung durch einzelne Zwischenprodukte, welche in einer Verkettung von Fertigungsprozessschritten zusammengeführt werden, beschreibt, indem der Produktsyntheseplan (S) den hierarchischen Aufbau des Produktes in Form eines Baumes von Produktsyntheseknoten (2) modelliert und ein Produktsyntheseknoten (2) ein Operationsknoten (O) oder ein Produktknoten (I) ist, wobei an einem Operationsknoten (O) das Produkt durch einen Fertigungsprozessschritt veränderbar ist, und Produktsyntheseknoten (2) im Produktsyntheseplan (S) durch Kanten verbunden sind, **wobei** eine Verknüpfungseinheit (10) vorgesehen ist, die den Maschinennetzwerkplan (M) und den Produktsyntheseplan (S) softwarebasiert miteinander zu einer Fertigungsabfolge (F) verknüpft, indem die Verknüpfungseinheit (10) für jeden Operationsknoten (O) des Produktsyntheseplanes (S) einen Fertigungsknoten (1) des Maschinennetzwerkplanes (M) auswählt, der den am jeweiligen Operationsknoten (O) durchzuführenden Fertigungsprozessschritt ausführt, wobei jeder Fertigungsknoten (1) der Fertigungsabfolge (F) mit zumindest einer Kante mit zumindest einem weiteren Fertigungsknoten (1) verbunden ist, sodass die Fertigungsabfolge (F) eine Abfolge von Fertigungsstationen und Transporteinheiten der mit dem Maschinennetzwerkplan (M) modellierte Fertigungsanlage (12) repräsentiert, die vom Produkt durchlaufen wird, um das Produkt in der Fertigungsanlage (12) herzustellen, **und wobei** die Anlagensteuerung (11) die Fertigungsanlage (12) ansteuert, um die Fertigungsabfolge (F) zur Herstellung des Produktes an der Fertigungsanlage (12) auszuführen.

## Claims

1. Method for producing a product in a manufacturing plant (12), whereas the product being produced in the manufacturing plant (12) in a number of manufacturing stations and being moved between successive manufacturing stations by transport units, **wherein** the manufacturing plant (12) is modeled with a machine network plan (M), wherein the machine network plan (M) models manufacturing hardware of the manufacturing plant (12) available for the manufacture, with the machine network plan (M) modeling the manufacturing plant (12) as a network of manufacturing nodes (1), and a manufacturing node (1) being a manufacturing station for carrying out a manufacturing process step and/or a transport unit for moving the product, and with manufacturing nodes (1) in the machine network plan (M) being connected by edges, **wherein** the product to be produced is modeled with a product synthesis plan (S), wherein the product synthesis plan (S) describes the hierarchical structure of the end product as a result of the manufacture using individual intermediate products which are combined in a chain of manufacturing process steps, with the product synthesis plan (S) modeling the hierarchical structure of the product in the form of a tree of product synthesis nodes (2), and a product synthesis node (2) being an operation node (O) or a product node (I), whereby the product being changed by a manufacturing process step at an operation node (O), and product synthesis nodes (2) being connected by edges in the product synthesis plan (S), **wherein** the machine network plan (M) and the product synthesis plan (S) are linked with each other in a software-based manner to form a manufacturing sequence (F), by selecting a manufacturing node (1) of the machine network plan (M) for each operation node (O) of the product synthesis plan (S), which manufacturing node carries out the manufacturing process step to be carried out at the relevant operation node (O), with each manufacturing node (1) of the manufacturing sequence (F) being connected to at least one further manufacturing node (1) by at least one edge, so that the manufacturing sequence (F) is a sequence of manufacturing stations and transport units of the manufacturing plant (12) modeled with the machine network plan (M), which sequence is passed through by the product in order to produce the product in the manufacturing plant (12), **and wherein** a plant controller (11) carries out the manufacturing sequence (F) i in the manufacturing plant (12) in order to produce the product.

2. Method according to claim 1, in which all possible mappings of the product synthesis plan (S) on the machine network plan (M) are determined in a software-based manner, and one of the possible mappings is selected as the manufacturing sequence (F).

3. Method according to claim 2, in which an optimality criterion is defined for a manufacturing sequence (F), and the manufacturing sequence (F) which best meets the optimality criterion is selected.

4. Method according to claim 3, in which a manufacturing outlay value is assigned to each manufacturing node (1) of the machine network plan (M) and, as an optimality criterion, a manufacturing outlay is determined as the sum of the manufacturing outlay values of the manufacturing node (1) involved in the manufacturing sequence (F).

5. Method according to claim 4, in which the manufacturing outlay value is a time or a defined cost value.

6. Method according to either claim 4 or 5, in which a weighted sum of the manufacturing outlay values of the manufacturing nodes (1) of the manufacturing sequence (F) is determined as the manufacturing outlay.

7. Method according to any of claims 1 to 6, in which, during or after the execution of a manufacturing process step at a manufacturing node (1) of the manufacturing sequence (F), the manufacturing sequence (F) for the product is re-determined by re-linking the product synthesis plan (S) and machine network plan (M), and the further production of the product is carried out using the new manufacturing sequence (F).

8. Method according to claim 7, in which during or after the execution of a manufacturing process step at each manufacturing node (1) of the manufacturing sequence (F), the manufacturing sequence (F) for the product is re-determined.

9. Manufacturing plant for producing a product having a plant controller (11) that controls a number of manufacturing stations and transport units of the manufacturing plant (12) for manufacturing the product, **wherein** the manufacturing plant (12) is modeled by means of a machine network plan (M), wherein the machine network plan (M) models manufacturing hardware of the manufacturing plant (12) available for the manufacture, with the machine network plan (M) modeling the manufacturing plant (12) as a network of manufacturing nodes (1), and a manufacturing node (1) being a manufacturing station for carrying out a manufacturing process step and/or a transport unit for moving the product and manufacturing nodes (1) in the machine network plan (M) being connected by edges, **wherein** the product to be produced is modeled with a product synthesis plan (S), wherein the product synthesis plan (S) describes the hierarchical structure of the end product as a result of the manufacture using individual intermediate products which are combined in a chain of manufacturing process steps, with the product synthesis plan (S) modeling the hierarchical structure of the product in the form of a tree of product synthesis nodes (2), and a product synthesis node (2) being an operation node (O) or a product node (I), whereby it being possible for the product to be changed by a manufacturing process step at an operation node (O), and product synthesis nodes (2) being connected by edges in the product synthesis plan (S), **wherein** a linking unit (10) is provided which links the machine network plan (M) and the product synthesis plan (S) with each other in a software-based manner to form a manufacturing sequence (F), in that the linking unit (10) is selecting a manufacturing node (1) of the machine network plan (M) for each operation node (O) of the product synthesis plan (S), which manufacturing node carries out the manufacturing process step to be carried out at the relevant operation node (O), with each manufacturing node (1) of the manufacturing sequence (F) being connected to at least one further manufacturing node (1) by at least one edge, so that the manufacturing sequence (F) is a sequence of manufacturing stations and transport units of the manufacturing plant (12) modeled with the machine network plan (M), which sequence is passed through by the product in order to produce the product in the manufacturing plant (12), **and wherein** the plant controller (11) controls the manufacturing plant (12) in order to carry out the manufacturing sequence (F) for producing the product in the manufacturing plant (12).

## Revendications

1. Procédé de fabrication d'un produit dans une installation de fabrication (12), le produit étant fabriqué dans l'installation de fabrication (12) dans un certain nombre de stations de fabrication et étant déplacé entre les stations de fabrication successives au moyen d'unités de transport, l'installation de fabrication (12) étant modélisée avec un plan de réseau de machines (M), le plan de réseau de machines (M) modélisant le matériel de fabrication de l'installation de fabrication (12) disponible pour la fabrication, en ce sens que le plan de réseau de machines modélise l'installation de fabrication (12) sous forme de réseau de nœuds de fabrication (1) et qu'un nœud de fabrication (1) représente une station de fabrication destinée exécuter une étape du processus de fabrication et/ou représente une unité de transport destinée à déplacer le produit, et que des nœuds de fabrication (1) sont reliés par des bords dans le plan de réseau de machines (M), le produit à fabriquer étant modélisé avec un plan de synthèse de produit (S), le plan de synthèse de produit (S) décrivant la structure hiérarchique du produit final résultant de la fabrication par des produits intermédiaires individuels, qui sont fusionnés en un enchaînement d'étapes du processus de fabrication, en ce sens que le plan de synthèse de produit (S) modélise la structure hiérarchique du produit sous la forme d'un arbre de nœuds de synthèse de produit (2) et qu'un nœud de synthèse de produit (2) représente un nœud d'opération (O) ou un nœud de produit (I), le produit étant modifié par une étape du processus de fabrication au niveau d'un nœud d'opération (O), et des nœuds de synthèse de produit (2) étant reliés par des bords dans le plan de synthèse de produit (S), le plan de réseau de machine (M) et le plan de synthèse de produit (S) étant associés l'un à l'autre par logiciel en une séquence de fabrication (F), en ce sens qu'un nœud de fabrication (1) du plan de réseau de machines (M) est sélectionné pour chaque nœud d'opération (O) du plan de synthèse de produit (S), qui exécute l'étape du processus de fabrication à effectuer au niveau du nœud d'opération (O) respectif, chaque nœud de fabrication (1) de la séquence de fabrication (F) étant relié par au moins un bord à au moins un autre nœud de fabrication (1), de sorte que la séquence de fabrication (F) représente une séquence de stations de fabrication et d'unités de transport de l'installation de fabrication (12) modélisée avec le plan de réseau de machines (M), et qui est parcourue par le produit afin de fabriquer le produit dans l'installation de fabrication (12), et la séquence de fabrication (F) étant exécutée au moyen d'un système de commande d'installation (11) pour fabriquer le produit au niveau de l'installation de fabrication (12).

2. Procédé selon la revendication 1, dans lequel toutes les représentations possibles du plan de synthèse du produit (S) sont déterminées sur le plan de réseau de machines (M) et une représentation possible est sélectionnée en tant que séquence de fabrication (F).

3. Procédé selon la revendication 2, dans lequel un critère d'optimalité est défini pour une séquence de fabrication (F) et la séquence de fabrication (F) qui répond le mieux au critère d'optimalité est sélectionnée.

4. Procédé selon la revendication 3, dans lequel une valeur de charge de fabrication est attribuée à chaque nœud de fabrication (1) du plan de réseau de machines (M) et une charge de fabrication est déterminée en tant que critère d'optimalité sous forme de somme des valeurs de charge de fabrication des nœuds de fabrication (1) faisant partie de la séquence de fabrication (F).

5. Procédé selon la revendication 4, dans lequel la valeur de charge de fabrication est un temps ou une valeur de coût définie.

6. Procédé selon la revendication 4 ou 5, dans lequel une somme pondérée des charges de fabrication des nœuds de fabrication (1) de la séquence de fabrication (F) est déterminée en tant que charge de fabrication.

7. Procédé selon l'une des revendications 1 à 6, dans lequel, pendant ou après l'exécution d'une étape du processus de fabrication au niveau d'un nœud de fabrication (1) de la séquence de fabrication (F), la séquence de fabrication (F) est à nouveau déterminée pour le produit en associant à nouveau le plan de synthèse du produit (S) et le plan de réseau de machines (M), et la fabrication du produit est poursuivie avec la nouvelle séquence de fabrication (F).

8. Procédé selon la revendication 7, dans lequel, pendant ou après l'exécution d'une étape du processus de fabrication, la séquence de fabrication (F) est à nouveau déterminée pour le produit au niveau de chaque nœud (1) de la séquence de fabrication (F).

9. Installation de fabrication destinée à la fabrication d'un produit, un système de commande d'installation (11) qui commande un certain nombre de stations de fabrication et d'unités de transport de l'installation de fabrication (12) étant prévu, l'installation de fabrication (12) étant modélisée avec un plan de réseau de machines (M), le plan de réseau de machines (M) modélisant le matériel de fabrication de l'installation de fabrication (12) disponible pour la fabrication, en ce sens que le plan de réseau de machines (M) modélise l'installation de fabrication (12) sous forme de réseau de nœuds de fabrication (1) et qu'un nœud de fabrication (1) est une station de fabrication destinée à exécuter une étape du processus de fabrication et/ou est une unité de transport destinée à déplacer le produit, et que des nœuds de fabrication (1) sont reliés par des bords dans le plan de réseau de machines (M), le produit à fabriquer étant modélisé avec un plan de synthèse du produit (S), le plan de synthèse de produit (S) décrivant la structure hiérarchique du produit final résultant de la fabrication par des produits intermédiaires individuels, qui sont fusionnés en un enchaînement d'étapes du processus de fabrication, en ce sens que le plan de synthèse de produit (S) modélise la structure hiérarchique du produit sous la forme d'un arbre de nœuds de synthèse de produit (2) et qu'un nœud de synthèse de produit (2) est un nœud d'opération (O) ou un nœud de produit (I), le produit pouvant être modifié par une étape du processus de fabrication, et des nœuds de synthèse de produit (2) étant reliés par des bords dans le plan de synthèse de produit (S), une unité d'association (10) étant prévue pour associer l'un à l'autre par logiciel le plan de réseau de machines (M) et le plan de synthèse de produit (S) en une séquence de fabrication (F), en ce sens que l'unité d'association (10) sélectionne un nœud de fabrication (1) pour chaque nœud d'opération (O) du plan de synthèse de produit (S), qui exécute l'étape du processus de fabrication à effectuer au niveau du nœud d'opération (O) respectif, chaque nœud de fabrication (1) de la séquence de fabrication (F) étant relié par au moins un bord à au moins un autre nœud de fabrication (1), de sorte que la séquence de fabrication (F) représente une séquence de stations de fabrication et d'unités de transport de l'installation de fabrication (12) modélisée avec le plan de réseau de machines (M), et qui est parcourue par le produit afin de fabriquer le produit dans l'installation de fabrication (12), et le système de commande d'installation (11) commandant l'installation de fabrication (12) afin d'exécuter la séquence de fabrication (F) pour fabriquer le produit au niveau de l'installation de fabrication (12).
